## Europäisches Patentamt
## European Patent Office
## Office européen des brevets

(19)

(11) Veröffentlichungsnummer : **0 494 918 B1**

(12) **EUROPÄISCHE PATENTSCHRIFT**

(45) Veröffentlichungstag der Patentschrift :
15.09.93 Patentblatt 93/37

(51) Int. Cl.$^5$ : **H04B 1/66**

(21) Anmeldenummer : **90914689.6**

(22) Anmeldetag : **04.10.90**

(86) Internationale Anmeldenummer :
**PCT/EP90/01661**

(87) Internationale Veröffentlichungsnummer :
**WO 91/05411 18.04.91 Gazette 91/09**

(54) **VERFAHREN ZUR ÜBERTRAGUNG EINES SIGNALS.**

(30) Priorität : **06.10.89 DE 3933470**

(43) Veröffentlichungstag der Anmeldung :
**22.07.92 Patentblatt 92/30**

(45) Bekanntmachung des Hinweises auf die
Patenterteilung :
**15.09.93 Patentblatt 93/37**

(84) Benannte Vertragsstaaten :
**AT BE CH DE DK ES FR GB IT LI NL SE**

(56) Entgegenhaltungen :
**EP-A- 193 143**
**EP-A- 251 028**
**WO-A-90/09063**
**Rundfunktechnische Mitteilungen, vol. 33, no.
4, July 1989 (Norder- stedt, DE); T. Vaupel :
"Transformationscodierung für qualitativ
hochwertige Audiosignale mit Signalvor- und
-Nachverarbeitung im Zeitbereich", pages
149-154**

(73) Patentinhaber : **TELEFUNKEN Fernseh und
Rundfunk GmbH
Göttinger Chaussee 76
D-30453 Hannover (DE)**

(72) Erfinder : **VAUPEL, Thomas
Leggewiestr. 23
D-4300 Essen (DE)**
Erfinder : **KRAHE, Detlef
Michelsheide 13
D-4152 Kempen 3 (DE)**

(74) Vertreter : **Einsel, Robert, Dipl.-Ing.
TELEFUNKEN Fernseh und Rundfunk GmbH
Patent- und Lizenzabteilung Göttinger
Chaussee 76
D-30453 Hannover (DE)**

EP 0 494 918 B1

**Beschreibung**

Die Erfindung betrifft ein Verfahren zur Übertragung eines Signals nach dem Oberbegriff des Anspruchs 1.

Bei der Übertragung eines Audiosignals, z.B. bei der Rundfunkübertragung, Kabelübertragung, Satellitenübertragung und bei Aufzeichnungsgeräten ist es bekannt, das analoge Audiosignal in ein digitales Audiosignal mit einer bestimmten Auflösung umzuwandeln, in dieser Form zu übertragen und bei der Wiedergabe wieder in ein analoges Signal umzusetzen. Durch die digitale Übertragung wird insbesondere bei der Wiedergabe ein größerer Störabstand erreicht.

Die für die Übertragung eines solchen Signals erforderliche Bandbreite ist im wesentlichen bestimmt durch die Zahl der zu übertragenden Abtastwerte pro Zeiteinheit sowie durch die Auflösung.

In der Praxis besteht die Forderung, die für die Übertragung notwendige Bandbreite möglichst klein zu halten, um mit einem schmalbandigen Kanal auszukommen oder über einen breitbandigen Kanal möglichst viele Audiosignale gleichzeitig übertragen zu können. Die erforderliche Bandbreite läßt sich ansich verringern durch eine Reduzierung der Abtastwerte oder der Anzahl der Bits pro Abtastwert. Diese Maßnahme hat aber in der Regel eine Verschlechterung der Wiedergabequalität zur Folge.

Bei einem aus der DE-OS 35 06 912 bekannten Verfahren wird zur Verbesserung der Wiedergabequalität das digitale Audiosignal in zeitlich aufeinanderfolgende Abschnitte zerlegt und in ein Kurzzeitspektrum transformiert, welches jeweils für die Zeitabschnitte die Spektralkomponenten des Signals darstellt. In dem Kurzzeitspektrum lassen sich auf Grund psychoakustischer Gesetzmäßigkeit im allgemeinen Komponenten, die vom Hörer nicht wahrgenommen werden, also im nachrichtentechnischen Sinne irrelevant sind, besser auffinden, als im Zeitbereich. Diese Komponenten werden bei der Übertragung weniger gewichtet oder ganz weggelassen. Hierdurch kann bei der Übertragung ein beträchtlicher Teil der sonst notwendigen Daten entfallen, so daß die mittlere Bitrate wesentlich verringert werden kann.

Durch die Bildung von Zeitabschnitten wird jedoch die Frequenzauflösung beeinträchtigt, da dem Spektrum des ursprünglichen Signals zusätzlich die durch den Signalanstieg und -abfall am Anfang und Ende des Fensters verursachten Spektralanteile zugefügt werden. Eine Verbesserung der Frequenzauflösung kann durch eine geringe Flankensteilheit der Fensterfunktion sowie durch eine Ausdehnung des Flankenbereichs innerhalb des Fensters erzielt werden. Bei dieser Maßnahme ist zwangsläufig eine Überlappung benachbarter Zeitabschnitte erforderlich.

Wird der Flankenbereich soweit ausgedehnt, daß die Fensterfunktionen in keinen Bereich mehr einen konstanten Wert aufweist, so müssen sich benachbarte Zeitabschnitte um 50% überlappen. Dadurch wird die Zahl der Abtastwerte und dementsprechend die Datenmenge verdoppelt.

Aus den Veröffentlichung J.P. Princen and A.B. Bradley, "Analysis/Synthesis Filter Bank Design Based on Time Domain Aliasing Cancellation", IEEE Transactions, ASSP-34, No. 5, Oct. 1986, pp. 1153-1161; und J.P. Princen, A.W. Johnson and A.B. Bradley, "Subband/Transform Coding Using Filter Bank Design Based on Time Domain Aliasing Cancellation", IEEE Int. Conference on Acoustics, Speech and Signal Processing 1987, S. 2161-2164, ist es für sich bekannt, bei einer 50%igen Überlappung aufeinanderfolgender Zeitabschnitte die Datenmenge wieder auf den ursprünglichen Wert zu reduzieren, indem nur jeder zweite Abtastwert codiert wird. Die durch Unterabtastung entstehenden Aliaskomponenten heben sich unter Anwendung des in dieser Literaturstelle beschriebenen Verfahrens nach der Rücktransformation bei der Zusammenfügung der Zeitabschnitte auf.

Es hat sich gezeigt, daß bei Amplitudenschwankungen innerhalb eines Zeitabschnittes, insbesondere bei erst im Verlaufe eines Blocks aus der Ruhe einsetzenden Signalen, diese Signale nach der Übertragung mit wahrnehmbaren Störungen überlagert sind. Die Ursache für die Wahrnehmbarkeit liegt darin , daß die Störungen auch vor dem Einsetzen der Signale auftreten und damit ungenügend verdeckt werden.

Diese Störungen können z.B. durch Quantisierungsrauschen entstehen, das sich dem Kurzzeitspektrum überlagert. Nach der Rücktransformation treten die Rauschanteile dann innerhalb des gesamten Blocks im Zeitbereich auf.

Zur Verringerung dieser Störungen könnten die Signale in dem Block, in dem die Pegeländerung auftritt, einer Kompression und nach der Rücktransformation einer Expansion unterzogen werden. Erstreckt sich die Anhebung des Pegels zur Durchführung der Kompression dabei jedoch nicht über den ganzen Block, so sind die Signalanteile in einem anderen Blockbereich mit Aliaskomponenten verknüpft, die sich nicht durch die Expansion rückgängig machen lassen.

Der Erfindung liegt die Aufgabe zugrunde, bei einem Verfahren der eingangs genannten Art eine Verbesserung der Analyseschärfe des zu transformierenden Signals mit einer Verbesserung des Störabstandes bei starken Signaländerungen zu verbinden.

Diese Aufgabe wird bei einem Verfahren, wie es im Oberbegriff des Anspruchs 1 beschrieben ist, durch die im kennzeichnenden Teil angegebenen Merkmale gelöst.

Das erfindungsgemäße Verfahren verwendet also bei Signalen die nur geringen Pegeländerungen unterworfen sind, überlappende Blöcke mit Fensterfunktionen, die eine hohe Analyseschärfe ergeben. Wird nun ein Pegelsprung detektiert, der einen vorgegebenen Schwellwert überschreitet, so werden die Fensterfunktionen verändert.

Diese veränderten Fensterfunktionen besitzen nur noch eine geringe oder keine Überlappung. Die nach der Transformation autretenden Kurzzeitspektren werden dann nicht mehr unterabgetastet, sondern vollständig abgetastet. Dadurch können hier keine Aliaskomponenten entstehen. Es wird hierbei in Kauf genommen, daß die innerhalb der Überlappungsbereiche doppelt anfallenden Spektralwerte die zu codierende Datenmenge erhöhen. Die mit den veränderten Fensterfunktionen gewichteten Signale können einer Kompression mit anschließender komplementärer Expansion unterzogen werden. Dadurch werden die nach der Rücktransformation vor dem Pegelsprung auftretenden Störungen, auch als Vorecho bezeichnet, abgesenkt.

Nach dem Pegelsprung wird das Signal dann wieder in überlappenden Blöcken bearbeitet.

Weiterbildungen und vorteilhafte Ausgestaltungen ergeben sich aus den Ansprüchen, der Beschreibung und der Zeichnung, die ein Ausführungsbeispiel erläutert.

In der Zeichnung zeigen:

Fig. 1 Ein Flußdiagramm mit den wesentlichen Verfah rensschritten der Erfindung,

Fig. 2 eine Darstellung von Nutzsignal und Aliaskomponenten bei Anwendung des Verfahrens gemäß der Literaturstelle "Princen & Bradley",

Fig. 3 eine Darstellung der zeitlichen Folge von Fensterfunktionen bei einem Signalsprung,

Fig. 4 eine Darstellung ähnlich Fig. 3, jedoch mit anderen Fensterfunktionen,

Fig. 5 für die Anwendung des "Time Domain Aliasing Cancellation"-Verfahrens geeignete Fensterfunktionen,

Fig. 6a-d die Darstellung eines im Verlaufe eines Blocks einsetzenden Signals im Original sowie nach der Rücktransformation,

Fig. 7 die Aufteilung in Unterblöcke,

Fig. 8 eine Fensterfunktion, der die Blöcke überlagert werden,

Fig. 9 den Energieverlauf innerhalb eines Blockes mit und ohne Kompression,

Fig. 10 eine Darstellung des nicht angehobenen und des angehobenen Signals bei einem Signalsprung bei nicht überlappenden Fenstern zur Energieberechnung der Unterblöcke,

Fig. 11 eine Darstellung ähnlich Fig. 10, jedoch mit 50% überlappenden Fenstern zur Energieberechnung der Unterblöcke,

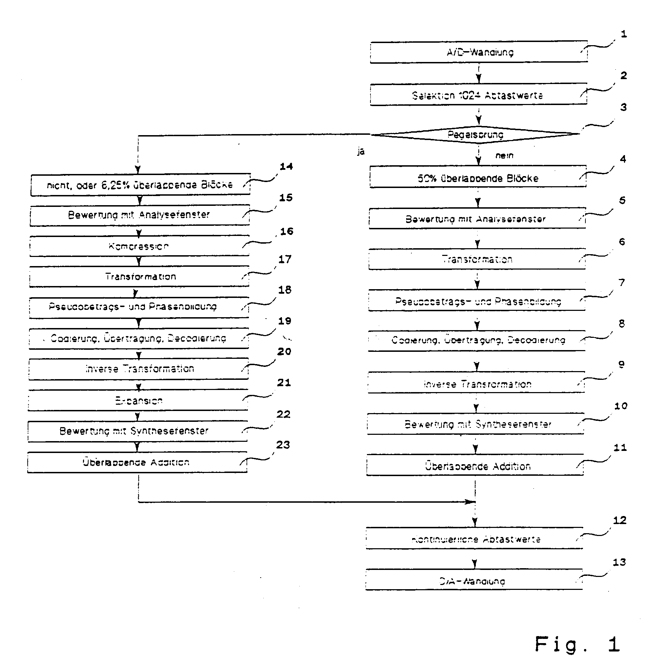

In dem in Fig. 1 dargestellten Flußdiagramm sind die einzelnen Verfahrensschritte zur Durchführung des Verfahrens der Erfindung dargestellt.

Die Ausgangsgröße des Verfahrens bildet ein analoges Audiosignal, das gemäß Verfahrensschritt 1 in ein digitales Signal umgewandelt wird, in dem Amplitudenwerte als Abtastwerte digital codiert vorliegen.

Im Verfahrensschritt 2 wird das kontinuierliche Signal gefenstert, indem eine Reihe aufeinanderfolgender Abtastwerte, im vorliegenden Fall 1024 Abtastwerte, selektiert werden.

Im Verfahrensschritt 3 wird eine Entscheidung hinsichtlich eines einen vorgegebenen Schwellwert überschreitenden Pegelsprunges getroffen. Liegt kein Pegelsprung vor, so geht es weiter mit Verfahrensschritt 4.

Im Verfahrensschritt 4 werden aus den selektierten Abtastwerten Blöcke gebildet, die sich zeitlich um 50% überlappen. Das bedeutet, daß in benachbarten Blöcken teilweise dieselben Abtastwerte vorhanden sind, allerdings an unterschiedlichen Stellen. So entsprechen die in der ersten Hälfte eines aktuellen Blocks vorhandenen Abtastwerte den in der zweiten Hälfte des vorhergehenden Blocks vorhandenen Abtastwerte.

Im Verfahrensschritt 5 werden die in den Blöcken enthaltenen Signalabschnitte mit Analysefenstern bewertet. Hierdurch wird ein weicher Signaleinsatz und -auslauf an den Blockgrenzen erzeugt, der die Analyseschärfe bei der nachfolgenden Transformation erhöht.

Der Verfahrensschritt 6 bildet die Transformation des bislang zeitdiskreten Signals in ein frequenzdiskretes Signal Anstelle von Amplitudenwerte treten nunmehr Spektralwerte auf, die jeweils einen Real- und Imaginärteil umfassen

Anschließend erfolgt im Verfahrensschritt 7 eine Umwandlung der Spektralwerte in eine Darstellung mit Psydobeträgen- und -phasen. Die Spektralwerte sind dann für ein Übertragungsverfahren aufbereitet und geeignet, wie es in der DE-OS 35 06 912 beschrieben ist. Im Zusammenhang mit der Umwandlung der Spektralwerte wird auch gleichzeitig eine Unterabtastung durchgeführt. Im Ergebnis stimmt dann die Anzahl der zu übertragenden Werte wieder mit der Anzahl der ursprünglichen Abtastwerte überein. Die durch die 50%ige Überlappung der Blöcke verursachte Verdoppelung der Daten ist also hier wieder rückgängig gemacht worden.

Im mit 8 bezeichneten Verfahrensschritt sind mehrere Einzelschritte zusammengefaßt, welche die Codierung, gegebenenfalls Datenreduktion, Übertragung und Decodierung umfassen. Diese Verfahrensschritte können entsprechend dem in der DE-OS 35 06 912 Verfahren durchgeführt werden.

Im Verfahrensschritt 9 erfolgt nun eine zu dem Verfahrensschritt 6 inverse Transformation, der jedoch bei vorangegangener Datenreduktion ein verändertes, von psychoakustisch redundanten Bestandteilen befreites Signal unterzogen wird. Das Ergebnis der inversen Transformation sind wieder zeitdiskrete Signale in Form von Signalabschnitten eines kontinuierlichen Signals darstellenden Blöcken. In den Blöcken sind aber nur noch die Hälfte der ursprünglichen Abtastwerte vorhanden.

Im anschließenden Verfahrensschritt 10 wird eine Wichtung der Blöcke mit Synthesefenstern vorgenommen. Die Synthesefensterfunktionen sind so ausgestaltet, daß sie die Signalverzerrungen, die durch Wichtung mit den Analysefenstern im Verfahrensschritt 5 entstanden sind, wieder ausgleichen. Die hier verwendeten Synthesefensterfunktionen erfüllen zwei Kriterien. Zum einen ergänzen sie sich im Überlappungsbereich mit den entsprechenden Analysefenstern zu Eins. Zum anderen ist das in der Mitte des Überlappungsbereichs gespiegelte Analysefenster multipliziert mit dem Synthesefenster für den Block n in der Differenz mit dem in der Mitte des Überlappungsbereich gespiegelte Analysefenster multipliziert mit dem Synthesefenster für den Block n+1 im Überlappungsbereich identisch Null. Dieses letztere Kriterium beinhaltet die Kompensation der Aliaskomponenten.

Im Verfahrensschritt 11 werden die sich 50% überlappenden Blöcke addiert, wobei die Aliaskomponenten in den beiden zu überlagernden Blöcken jeweils mit umgekehrtem Vorzeichen auftritt, so daß er sich bei Addition zu Null kompensiert.

Der Verfahrensschritt 12 stellt die Bildung kontinuierlicher Abtastwerte durch Aneinanderfügen der Blöcke mit den gefensterten Signalabschnitten dar.

Schließlich wird im letzten, mit 13 bezeichneten Verfahrensschritt eine Umwandlung der digital codierten Abtastwerte in ein analoges Signal vorgenommen, dem zwar objektiv Anteile fehlen, das aber subjektiv als mit dem ursprünglichen Signal identisch empfunden wird.

Liegt hingegen gemäß der Entscheidung in Verfahrensschritt 3 ein Pegelsprung vor, so geht es weiter mit Verfahrensschritt 14.

Im Verfahrensschritt 14 werden aus den selektierten Abtastwerten Blöcke gebildet, die sich zeitlich nicht oder um wesentlich weniger als 50% überlappen.

Im Verfahrensschritt 15 werden die in den Blöcken enthaltenen Signalabschnitte mit Analysefenstern, die einen steilflankigen Verlauf besitzen, bewertet.

Im Verfahrenschritt 16 findet eine Kompression statt.

Der Verfahrensschritt 17, der dem Verfahrensschritt 6 entspricht, bildet die Transformation des bislang zeitdiskreten Signals in ein frequenzdiskretes Signal. Anstelle von Amplitudenwerte treten nunmehr Spektralwerte auf, die jeweils einen Real- und Imaginärteil umfassen.

Anschließend erfolgt im Verfahrensschritt 18 eine Umwandlung der Spektralwerte in eine Darstellung mit Psydobeträgen- und -phasen. Die Spektralwerte sind dann für ein Übertragungsverfahren aufbereitet und geeignet, wie es in der DE-OS 35 06 912 beschriebenen ist. Eine Unterabtastung wird jedoch im Gegensatz zum Verfahrensschritt 7 nicht vorgenommen.

Im mit 19 bezeichneten Verfahrensschritt, der dem Verfahrensschritt 8 entspricht, sind mehrere Einzelschritte zusammengefaßt, welche die Codierung, gegebenenfalls Datenreduktion, Übertragung und Decodierung umfassen. Diese Verfahrensschritte können entsprechend dem in der DE-OS 35 06 912 Verfahren durchgeführt werden.

Im Verfahrensschritt 20 erfolgt analog zum Verfahrensschritt 9 nun eine zu dem Verfahrensschritt 17 bzw. 6 inverse Transformation, der jedoch bei vorangegangener Datenreduktion ein verändertes, von psychoakustisch redundanten Bestandteilen befreites Signal unterzogen wird. Das Ergebnis der inversen Transformation sind wieder zeitdiskrete Signale in Form von Signalabschnitten eines kontinuierlichen Signals darstellenden Blöcken. In den Blöcken sind aber nur noch die Hälfte der ursprünglichen Abtastwerte vorhanden.

Bei folgenden Verfahrensschritt 21 wird eine Expansion durchgeführt.

Im anschließenden Verfahrensschritt 22 wird eine Wichtung der Blöcke mit Synthesefenstern vorgenommen. Die Synthesefensterfunktionen sind so ausgestaltet, daß sie die Signalverzerrungen, die durch Wichtung mit den Analysefenstern im Verfahrensschritt 15 entstanden sind, wieder ausgleichen.

Im Verfahrensschritt 23 werden die Blöcke, soweit sie sich überlappen, addiert.

Danach werden die bereits beschriebenen gemeinsamen Verfahrensschritte 12 und 13 ausgeführt.

Fig. 2 stellt das Nutzsignal und die Aliaskomponenten bei einem einem Transformationsblock dar, wie er durch Anwendung des "Time Domain Aliasing Cancellation"-Verfahrens nach Princen und Bradley entstehen würde. Die Aliaskomponenten ergeben sich aus der Spiegelung des Nutzsignals einer Blockhälfte an der Symmetrielinie $t_b/4$ bzw. $3t_b/4$. Durch Überlappende Addition mit den 50% überlappenden Nachbarblöcken hebt sich die Aliaskomponente gerade heraus, da sie dort ein entsprechendes umgekehrtes Vorzeichen hat. So wird nach Hin-und Rücktransformation das korrekte Nutzsignal zurückgewonnen.

Würde ein Block gesondert einer Kompression unterworfen und anschließend nach dem "Time Domain Aliasing Cancellation"-Verfahren bearbeitet, so ließe sich der Kompressionsvorgang nicht mehr durch eine Expansion rückgängig machen. Sind z.B. Signale im ersten Blockviertel angehoben, so erscheinen diese angehobenen Signalanteile im zweiten Blockviertel als Aliaskomponente und sind additiv mit dem Nutzsignal verknüpft. Diese durch den Kompressor veränderte Aliaskomponente läßt sich mit den Aliaskomponenten der Nachbarblöcke nicht mehr kompensieren.

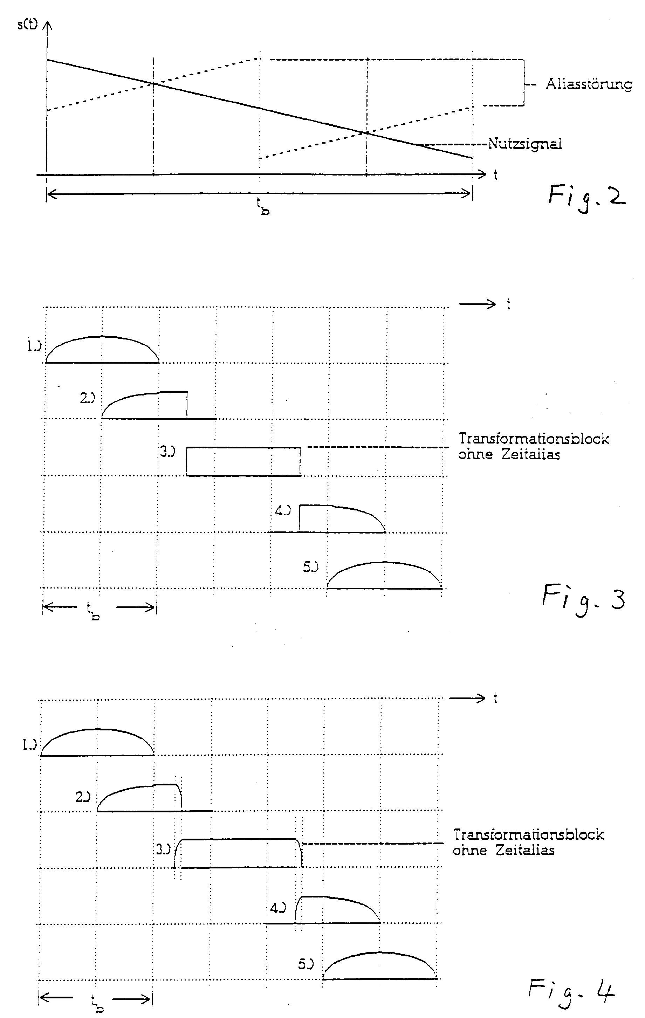

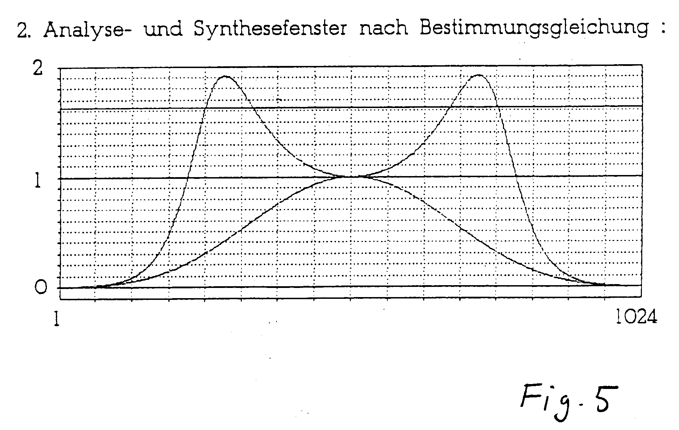

Vor Durchführung einer Kompression wird daher bei Erkennung eines Signalsprunges auf ein anderes Fenster umgeschaltet, das keine stark überlappenden Blöcke mehr erzeugt und auf diese Blöcke wird das "Time Domain Aliasing Cancellation"-Verfahren nicht mehr angewandt. Die zeitliche Folge solcher Blöcke ist in den folgenden Figuren 3 und 4 veranschaulicht.

Fig. 3 zeigt die zeitliche Folge von Blöcken mit Darstellung der zur Wichtung verwendeten Fensterfunktionen bei Detektion eines Signalsprunges, wobei während des Signalsprunges nicht überlappende Blöcke auftreten.

In Zeile 1 ist ein Block dargestellt, der sich mit vorherigen und dem folgenden Block 50% überlappt. Aliaskomponenten treten in beiden Blockhälften auf.

In Zeile 2 ist ein Anfangsblock für 0% Überlappung mit dem folgenden Block dargestellt. Aliaskomponenten treten nur in der ersten Blockhälfte auf, da das letzte Viertel des Blokkes identisch Null ist.

Zeile 3 zeigt einen mit einer rechteckigen Fensterfunktion bewerteten Block gleicher Blocklänge, jedoch ohne Überlappungen. In diesem Block kann eine sich über einen Teil der Blocklänge erstreckende Kompression und Expansion des Signals durchgeführt werden.

Zeile 4 zeigt einen Endblock für 0% Überlappung mit dem vorherigen Block. Aliaskomponenten treten nur in der zweiten Blockhälfte auf, da das erste Viertel des Blockes identisch Null ist.

In Zeile 5 ist wieder ein dem in Zeile 1 dargestellten Block entsprechender Block gezeigt. Diese Block besitzt eine 50% Überlappung mit dem vorherigen und nachfolgenden Block.

Fig. 4 zeigt die zeitliche Folge von Blöcken mit Darstellung der zur Wichtung verwendeten Fensterfunktionen bei Detektion eines Signalsprunges, wobei während des Signalsprunges sich 6,25% überlappende Blöcke auftreten.

In Zeile 1 ist ein Block dargestellt, der sich mit vorherigen und dem folgenden Block 50% überlappt. Aliaskomponenten treten in beiden Blockhälften auf.

In Zeile 2 ist ein Anfangsblock für 6,25% Überlappung mit dem folgenden Block dargestellt. Aliaskomponenten treten nur in der ersten Blockhälfte auf, da das letzte Viertel des Blockes identisch Null ist.

Zeile 3 zeigt einen mit einer rechteckigen Fensterfunktion bewerteten Block gleicher Blocklänge, jedoch ohne Überlappungen. In diesem Block kann eine sich über einen Teil der Blocklänge erstreckende Kompression und Expansion des Signals durchgeführt werden.

Zeile 4 zeigt einen Endblock für 6,25% Überlappung mit dem vorherigen Block. Aliaskomponenten treten nur in der zweiten Blockhälfte auf, da das erste Viertel des Blockes identisch Null ist.

In Zeile 5 ist wieder ein dem in Zeile 1 dargestellten Block entsprechender Block gezeigt. Diese Block besitzt eine 50% Überlappung mit dem vorherigen und nachfolgenden Block.

Die hier im Bereich eines Pegelsprunges verwendeten Fenster besitzen einen mittleren konstanten Verlauf und Flanken entsprechend einer Kosinusfunktion. Durch die im Bereich der Flanken vorhandene Überlappung entsteht nach der Transformation eine um 12,5% höhere Anzahl an Spektralwerten als bei den überlappungsfreien Rechteckblöcken gemäß Fig. 1.

Um dies bei der Codierung zu berücksichtigen kann eine blockübergreifende Bitzuweisung, gröbere Quantisierung oder eine Unterdrückung wenig relevanter Spektralwerte erfolgen.

Fig. 5 zeigt für die Anwendung des "Time Domain Aliasing Cancellation"-Verfahrens geeignete Fensterfunktionen, nämlich ein Analyse- und ein Synthesefenster, bei der die Synthesefensterfunktion aus der frei gewählten Analysefensterfunktion nach der Erfindung gemäß den Gleichungen:

$$s_n(t) = \frac{a_{n-1}(T_B/2 - t)}{a_n(T_B/2 - t) * a_{n+1}(t) + a_n(t) * a_{n+1}(T_B/2 - t)} ; 0 \leqq t \leqq T_B/2$$

$$s_{n+1}(t) = \frac{a_n(T_B/2 - t)}{a_n(T_B/2 - t) * a_{n+1}(t) + a_n(t) * a_{n+1}(T_B/2 - t)} ; 0 \leqq t \leqq T_B/2$$

berechnet wurde. In diesen Gleichungen bedeuten:

$a_n(t)$ die Analysefensterfunktion für den Block n,

$s_n(t)$ die Synthesefensterfunktion für den Block n,

$a_{n+1}(t)$ die Analysefensterfunktion für den Block n+1,

$s_{n+1}(t)$ die Synthesefensterfunktion für den Block n+1 und

$T_B$ die Blockzeit

Bei Anwendung dieser Gleichungen ergänzen sich die mit Analyse- und Synthesefenster bewerteten Signale zu Eins und Aliaskomponenten werden kompensiert.

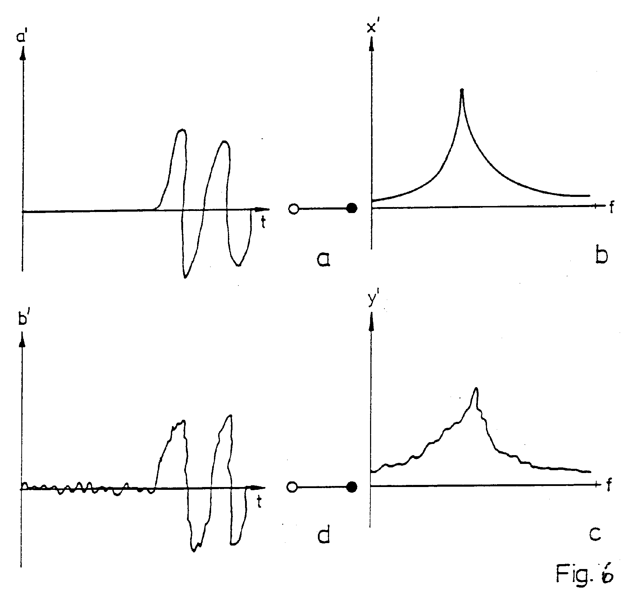

Der beim erfindungsgemäßen Verfahren berücksichtigte Fall, daß ein Signal aus der Ruhe plötzlich einsetzt und dieser Einsatz innerhalb eines Blockes, z.B. in dessen zweiter Hälfte stattfindet, ist in den folgenden Figuren 6a-d behandelt. Für den Zeitbereich ist dieser Fall ist in Fig. 6a dargestellt. Das transformierte Signal zeigt Fig. 6b. Durch Quantisierungsfehler bei der Kodierung überlagert sich dem in Fig. 6b dargestellten Spektrum ein Störspektrum, so daß das in Fig. 6c dargestellte Spektrum entsteht. Nach Rücktransformation beeinflußt dieses Störspektrum den Signalverlauf nicht erst ab dem Einsatz des Signals sondern bereits zu Beginn des Blockes wie Fig. 6d zeigt. Da der Vorverdeckungseffekt geringer als der Nachverdeckungseffekt ist, kann diese Störung hörbar werden.Durch entsprechende Kompression innerhalb des Blockes vorder Transformation und Übertragung und Expansion nach der Übertragung und Rücktransformation kann der Störabstand erheblich verbessert werden.

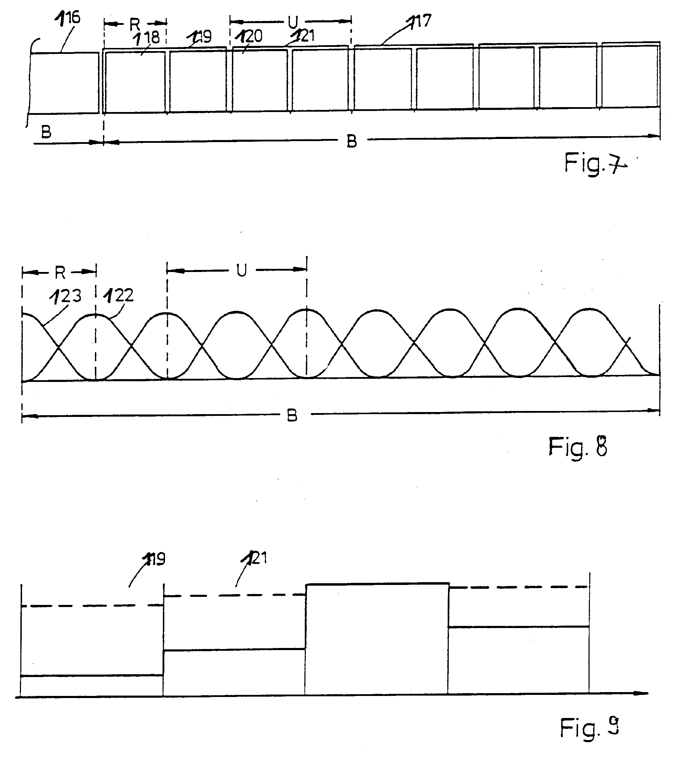

Zu diesem Zweck wird, wie in Fig. 7 dargestellt ist, jeder Block 116, 117... in Unterblöcke unterteilt. Diese Unterblökke 119, 120, 121... haben außer an den Blackrändern gleiche zeitliche Ausdehnungen derart, daß sie sich jeweils zur Hälfte überlappen. An den Blockrändern besteht eine Überlappung mit Unterblöcken 118 der halben zeitlichen Ausdehnung. In diesen sich überlappenden rechteckigen Unterblöcken werden die mittleren Signalleistungen bestimmt (Energie im Zeitabschnitt dividiert durch die Ausdehnung des Zeitabschnitts).

In einem nachfolgenden Schritt werden, wie in Fig. 8 gezeigt ist, die zunächst rechteckigen Unterblöcke 119, 120, 121... mit $\cos^2$-Fensterfunktionen 122 bewertet. Die Zeitabschnitte an den Blockrändern, die nur die halbe zeitliche Ausdehnung der übrigen Unterblöcke besitzen, werden mit einem $\cos^2$-Halbfenster 123 gewichtet. Die sich überlappenden Gewichtsfunktionen ergänzen sich zu jedem Zeitpunkt des Signalblocks zu 1.

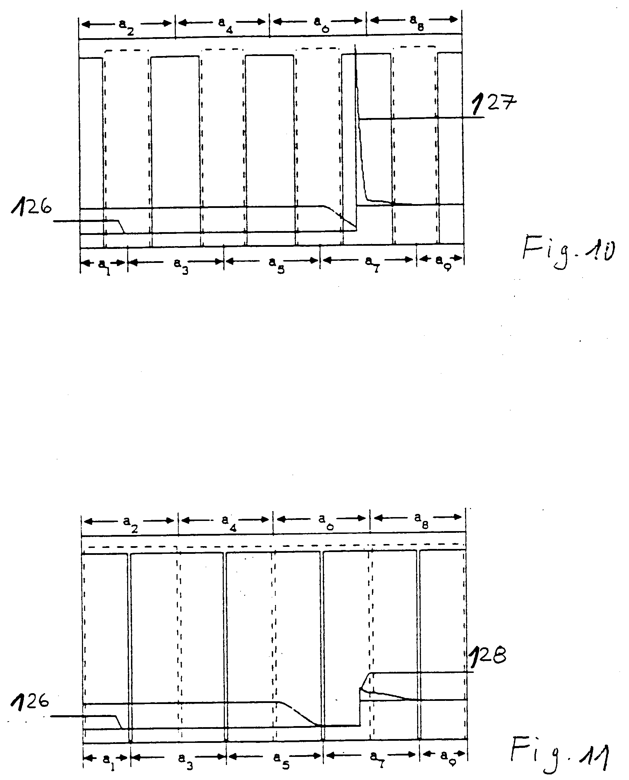

In Fig. 9 ist gezeigt, wie die Signale in den Unterblöcken 119, 120, 121 entsprechend den detektierten mittleren Leistungen, dargestellt durch die durchgezogenen Linien, so verstärkt, bzw. geschwächt werden, daß die mittleren Leistungen in den Unterblöcken 119, 120, 121... etwa gleich werden, dargestellt durch die gestrichelt gezeichneten Linien. Zwecks übersichtlicher Darstellung sind die Blöcke hier nicht gestrichelt gezeichnet. Durch die Verstärkung und Schwächung der Signale wird das Verhältnis zwischen der Blocknutzenergie und der durch die Kodierung entstehenden Blockstörenergie nicht verändert. Andererseits wird durch diese Maßnahme erreicht, daß nun in allen Unterblöcken der gleiche Störabstand besteht. Bezüglich des Störabstandes wird also dasselbe erreicht, wie wenn man von vorn herein durch Fensterung Blöcke gewählt hätte, die der Größe der Unterblöcke entsprechen würde. Die vorher erwähnten Nachteile kürzerer Blöcke werden jedoch vermieden.

Die sich überlappenden Unterblöcke werden zweckmäßig aus psycho-akustischen Gründen auf eine zeitliche Ausdehnung von ca. 2-4 ms bemessen. Bei Blöcken mit ca. 1000 Abtastwerten bei einer Abtastfrequenz von 44,1 kHz entspricht dies der Bildung von ca. 10-20 Unterblöcken. Weiterhin ist es zweckmäßig aus psycho-akustischen Gründen die Signalverstärkung auf einen Maximalwert von z.B. 40 dB zu begrenzen.

Es reicht aus, die Verstärkungsfaktoren zu quantisieren, wobei die Quantisierung relativ grob durchgeführt werden kann,um die für die Quantisierungsstufen notwendigen zusätzlichen Daten zu begrenzen. Die Quantisierung kann so vorgenommen werden, daß für kleinere Verstärkungsfaktoren kleinere Quantisierungsstufenhöhen gewählt weiden als für größere. Dabei wird die Quantisierung so bemessen, daß die mittlere Leistung im angehobenen Unterblock die im Unterblock mit der höchsten detektierten mittleren Leistung, also dem Bezugsblock, nicht übersteigt. Auf diese Weise ist es möglich, sogar einen Gewinn im Verhältnis der Blocknutzenergie zur Blockstörenergie zu erzielen. In diesem Fall ist der Störabstand allen Unterblöcken aber nicht mehr identisch, sondern nur noch annähernd gleich.

Wenn nur die Unterblöcke, in denen die Kompression des Signals stattfindet, durch überlappende Fensterfunktionen gewichtet sind, nicht aber die Unterblöcke, die zur Ermittlung der mittleren Signalleistungen zur Berechnung der Verstärkungsfaktoren dienen, können sich bei bestimmten Signalsprüngen überhöhte Verstärkungsfaktoren ergeben.

Dieser Fall ist in Fig. 10 für einen idealen Rechtecksprung dargestellt. Der nicht angehobene Signalverlauf ist mit 126,der angehobene Signalverlauf mit 127 bezeichnet. Die kleinen Buchstaben a0 bis a8 stehen für die Anhebungsfaktoren oder auch als Verstärkungsfaktoren bezeichnet. Die Überhöhung tritt dann auf, wenn die Sprungflanke und die Unterblockgrenze nicht übereinstimmen.

Um die Überhöhung klein zu halten, wird gemäß einer Weiterbildung die Ermittlung der mittleren Signalleistungen ebenfalls in Blöcken mit 50% Überlappung vorgenommen, hier allerdings mit Rechteckfenstern. Sie entsprechen direkt den Unterblöcken, in denen die Signale verstärkt werden. Das Ergebnis dieser Maßnahme ist in Fig. 11 für den gleichen Signalsprung dargestellt. Mit 126 ist wieder die nicht angehobene Signalverlauf, 128 diesmal der angehobene veränderte Signalverlauf bezeichnet.

Wendet man das bis hierhin erläuterte Verfahren auf das komplette Audiosignal an, so sind die Verstärkungsfaktoren nur für die energiereichen Spektralanteile richtig, da diese im wesentlichen die Faktoren bestimmen. In Audiosignalen sind fast immer die Spektralanteile bis ca. 3 kHz die energiereichsten.

Besitzt das Verfahren für die energiereichen Spektralanteile bis ca. 3 kHz die größte Darstellungsgenauigkeit, so können Signalsprünge bei höheren Frequenzen mit geringeren Energieanteilen zu größeren Ungenauigkeiten bei der Codierung führen, was zu eventuell höhrbaren Störungen führt.

Das Signal kann auch vor der Übertragung und Codierung einer Preemphase und nach der Übertragung und Decodierung einer Deemphase unterworfen werden.

**Patentansprüche**

1. Verfahren zur Übertragung eines Audiosignals, bei dem das analoge Signal in ein digitales Signal umgewandelt, übertragen und wieder in ein analoges Signal umgesetzt wird, wobei das digitale Audiosignal durch Fenster in aufeinanderfolgende Blöcke aufgeteilt und jeweils durch Transformation in ein Spektrum umgewandelt wird, daß anschließend die Spektren codiert, übertragen, nach der Übertragung decodiert und durch Rücktranformation wieder in Teilsignale überführt werden, daß die die Teilsignale enthaltenen Blöcke schließlich wieder aneinander gefügt werden, wobei das Signal auf Pegeländerungen hin ausgewertet wird,**dadurch gekennzeichnet**, daß

a) bei Pegeländerungen unterhalb eines vorgegebenen Wertes das Signal in sich 50% überlappende Blöcke aufgeteilt und die in den Blöcken enthaltenen Signalabschnitte mittels Analysefenstern bewertet werden, daß die Transformation nach einem eine Umterabtastung mit Kompensation der Aliaskomponenten ermöglichenden Verfahren, insbesondere dem "Time Domain Aliasing Cancellation"-Verfahren durchgeführt wird, daß nach der Rücktransformation die die Teilsignale enthaltenen Blöcke mittels Synthesefernstern bewertet und wieder überlappend aneinander gefügt werden und daß

b) bei Pegeländerungen oberhalb eines vorgegebenen Wertes das Signal in sich weniger als 50% oder nicht überlappende Blöcke aufgeteilt und die in den Blöcken enthaltenen Signalabschnitte vollständig abgetastet werden und daß die Signale vor der Transformation einer Kompression und nach der Rücktransformation einer Expansion unterzogen werden.

2. Verfahren nach Anspruch 1, dadurch gekennzeichnet, daß zur Erkennung von Pegeländerungen die im dem Signal enthaltenen Energien eines sich über wenigsten zwei Blöcke erstreckenden Zeitabschnittes bestimmt werden und die Energiewerte eines jüngeren Bereichs des Zeitabschnittes mit den eines älteren Bereichs verglichen werden.

3. Verfahren nach Anspruch 1 oder 2, **dadurch gekennzeichnet**, daß die Fensterfunktionen der Synthesefenster in Abhängigkeit der Fensterfunktionen der entsprechenden Analysefenster im Überlappungsbereich gemäß den Gleichungen:

$$s_n(t) = \frac{a_{n-1}(T_B/2 - t)}{a_n(T_B/2 - t) * a_{n+1}(t) + a_n(t) * a_{n+1}(T_B/2 - t)} ; 0 \leq t \leq T_B/2$$

$$s_{n+1}(t) = \frac{a_n(T_B/2 - t)}{a_n(T_B/2 - t) * a_{n+1}(t) + a_n(t) * a_{n+1}(T_B/2 - t)} ; 0 \leq t \leq T_B/2$$

bestimmt werden, wobei
$a_n(t)$ die Analysefensterfunktion für den Block n,
$s_n(t)$ die Synthesefensterfunktion für den Block n,
$a_{n+1}(t)$ die Analysefensterfunktion für den Block n+1,
$s_{n+1}(t)$ die Synthesefensterfunktion für den Block n+1 und
$T_B$ die Blockzeit
darstellen und daß die nicht 50% überlappenden Blöcke in Unterblöcke aufgeteilt werden und das Signal in Abhängigkeit der mittleren Signalleistungen in den Unterblöcken in diesen bei der Kompression verstärkt und/oder geschwächt und bei der Expansion komplementär behandelt wird.

4. Verfahren nach Anspruch 3, **dadurch gekennzeichnet**, daß die maximale Änderung der zeitabhängigen Verstärkung und/oder Schwächung begrenzt wird.

5. Verfahren nach Anspruch 3 oder 4, **dadurch gekennzeichnet**, daß die Unterteilung der Blöcke in Unterblöcke durch Gewichtung mit Fensterfunktionen erfolgt, die über dem Zeitabschnitt einen konstanten Wert aufweisen.

6. Verfahren nach Anspruch 5, **dadurch gekennzeichnet**, daß sich die Fensterfunktionen überlappen und

7

die Blöcke an ihren beiden Rändern mit Fensterfunktionen der halben zeitlichen Breite gewichtet werden.

7. Verfahren nach Anspruch 6, **dadurch gekennzeichnet**, daß die Blöcke mit weiteren, "weichen" Fensterfunktionen gewichtet werden, die einen stetigen Verlauf aufweisen, an den Grenzen der Unterblöcke zu Null werden und sich im gesamten Block zu einem konstanten Gewichtungswert, vorzugsweise zu 1, ergänzen.

8. Verfahren nach einem der Ansprüche 5 bis 7, **dadurch gekennzeichnet**, daß die Fensterfunktionen außer an den Blockrändern Hanning-Fenster enspr. $\cos^2$-Fenster und an den Blockrändern $\cos^2$-Halbfenster sind.

9. Verfahren nach einem der Ansprüche 5 bis 8, **dadurch gekennzeichnet**, daß die Signale innerhalb der jeweiligen Unterblöcke mit einem konstanten Faktor verstärkt oder geschwächt werden.

10. Verfahren nach Anspruch 9, **dadurch gekennzeichnet**, daß die Verstärkungsfaktoren (Schwächungsfaktoren) aus den mittleren Leistungen in den Unterblöcken entsprechenden Signalabschnitten als Detektionsabschnitten abgeleitet werden.

11. Verfahren nach einem der Ansprüche 5 bis 8, **dadurch gekennzeichnet**, daß auch die Detektionsabschnitte wie die Unterblöcke durch Gewichtung der Blöcke mit Fensterfunktionen gewonnen werden, die über dem Zeitabschnitt einen konstanten Wert besitzen.

12. Verfahren nach Anspruch 11, **dadurch gekennzeichnet**, daß sich die Fensterfunktionen zu vorzugsweise überlappen.

13. Verfahren nach einem der Ansprüche 10 bis 12, **dadurch gekennzeichnet**, daß für die mittleren Leistungen in den Detektionsabschnitten Maßzahlen (Energie geteilt durch Abschnittdauer) gebildet werden.

14. Verfahren nach Anspruch 13, **dadurch gekennzeichnet**, daß die Maßzahlen für die Detektionsabschnitte eines Blocks auf die Maßzahl eines Detektionsabschnittes, vorzugsweise desjenigen mit der größten Maßzahl, bezogen werden und daß die entstehenden Maßzahlverhältnisse die Verstärkungsfaktoren, vorzugsweise proportional, bestimmen.

15. Verfahren nach Anspruch 14, **dadurch gekennzeichnet**, daß quantisierte Verstärkungsfaktoren gewählt werden.

16. Verwendung des Verfahren nach einen der vorhergehenden Ansprüche bei der Rundfunkübertragung, Kableübertragung, Satellitenübertragung oder bei Aufzeichnungsgeräten.

## Claims

1. Method for the transmission of an audio signal in which the analogue signal is converted into a digital signal, transmitted and again transformed into an analogue signal, wherein the digital audio signal is divided into successive blocks by windows and converted into a spectrum by a respective transformation, that thereafter the spectra are coded, transmitted, decoded after the transmission and converted again into partial signals by a reverse transformation, that the blocks containing the partial signals are finally fitted together again, wherein the signal is evaluated on the basis of the changes in level, characterised in that,

   a) for changes in level below a predetermined value, the signal is divided up into blocks that overlap one another by 50% and the signal segments contained in the blocks are evaluated by means of analysis windows, that the transformation is carried out in accordance with a method which enables a subscanning with compensation of the aliasing components, in particular the "Time Domain Aliasing Cancellation" method, that after the reverse transformation the blocks containing the partial signals are evaluated by means of synthesising windows and are fitted together again in an overlapping manner and that

   b) for changes in level above a predetermined value, the signal is divided up into blocks that overlap one another by less than 50% or do not overlap and the signal segments contained in the blocks are completely scanned and that the signals are submitted to a compression before the transformation and to an expansion after the reverse transformation.

2. Method in accordance with Claim 1, characterised in that, for the recognition of the changes in level, the energies of a time period extending over at least two blocks contained in the signal are determined end the energy values from an earlier region of the time period ere compared with those from a later region.

3. Method in accordance with Claim 1 or 2, characterised in that, the window functions of the synthesising windows are determined in dependence on the window functions of the corresponding analysis windows in the overlapping region in accordance with the equations:

$$s_n(t) = \frac{a_{n+1}(T_B/2 - t)}{a_n(T_B/2 - t) * a_{n+1}(t) + a_n(t) * a_{n+1}(T_B/2 - t)} \ ; \ 0 \leq t \leq T_B/2$$

$$s_{n+1}(t) = \frac{a_n(T_B/2 - t)}{a_n(T_B/2 - t) * a_{n+1}(t) + a_n(t) * a_{n+1}(T_B/2 - t)} \ ; \ 0 \leq t \leq T_B/2$$

wherein,

$a_n(t)$ represents the analysis window function for the block n,

$s_n(t)$ the synthesising window function for the block n,

$a_{n+1}(t)$ the analysis window function for the block n+1,

$s_{n+1}(t)$ the synthesising window function for the block n+1 and

TB the block time

and that the blocks not overlapping by 50% are divided up into sub blocks and the signal in the sub blocks is amplified and/or attenuated in dependence on the average signal powers therein during the compression and is treated in a complementary manner during the expansion.

4. Method in accordance with Claim 3, characterised in that, the maximum change of the time dependent amplification and/or attenuation is limited.

5. Method in accordance with Claim 3 or 4, characterised in that, the division of the blocks into sub blocks is effected by weighting with window functions which have a constant value over the time period.

6. Method in accordance with Claim 5, characterised in that, the window functions overlap one another and the blocks are weighted at their two ends with window functions of half the temporal width.

7. Method in accordance with Claim 6, characterised in that, the blocks are weighted with further "soft" window functions that have a continuous waveform, are zero at the limits of the sub blocks and, in the whole block, supplement a constant weighting value, preferably of 1.

8. Method in accordance with any of the Claims 5 to 7, characterised in that, the window functions, except at the edges of the blocks, are Hanning windows corresponding to $\cos^2$ windows and at the edges of the blocks are $\cos^2$ half windows.

9. Method in accordance with any of the Claims 5 to 8, characterised in that, the signals within the respective sub blocks are amplified or attenuated by a constant factor.

10. Method in accordance with Claim 9, characterised in that, the amplification factors (attenuation factors) are derived from the average powers in the signal portions corresponding to the sub blocks as detection portions.

11. Method in accordance with any of the Claims 5 to 8, characterised in that, the detection portions are also obtained, like the sub blocks, by weighting the blocks with window functions which have a constant value over the time period.

12. Method in accordance with Claim 11, characterised in that, for preference, the window functions overlap.

13. Method in accordance with any of the Claims 10 to 12, characterised in that, specifications (energy divided by duration of the period) are formed for the average powers in the detection portions.

14. Method in accordance with Claim 13, characterised in that, the specifications for the detection portions of a block are related to the specification of a detection portion, preferably that one having the greatest specification and that the resulting specification ratios determine the amplification factors, preferably proportionally.

**15.** Method in accordance with Claim 14, characterised in that, quantised amplification factors are selected.

**16.** Use of the method in accordance with any preceding claim in broadcast transmission, cable transmission, satellite transmission or in recording equipment.


**Revendications**

**1.** Procédé pour la transmission d'un signal son dans lequel le signal analogique est transformé en un signal numérique, est transmis et est retransformé en un signal analogique, le signal son numérique étant réparti par des fenêtres en blocs qui se succèdent et étant transformé respectivement par transformation en un spectre, que les spectres sont ensuite codés, transmis, décodés après la transmission et retransformés en signaux partiels par transformation inverse, les blocs contenant les signaux partiels étant finalement assemblés à nouveau les uns aux autres, le signal étant exploité pour ce qui est des variations de niveau, **caractérisé en ce** que

a) pour des variations de niveau au-dessous d'une valeur prédéterminée le signal est réparti en blocs qui se chevauchent de 50% et les fractions de signal contenues dans les blocs sont pondérées à l'aide de fenêtres d'analyse, que la transformation est réalisée selon un procédé qui permet un sous-balayage avec compensation des composantes fictives, en particulier le procédé de "Time Domain Aliasing Cancellation", qu'après la tranformation inverse les blocs qui contiennent les signaux partiels sont pondérés à l'aide de fenêtres de synthèse et sont assemblés l'un à l'autre à nouveau en se chevauchant et que

b) pour des variations de niveau au-dessus d'une valeur prédéterminée le signal est réparti en blocs qui ne se chevauchent pas ou qui se chevauchent de moins de 50% et que les fractions de signal contenues dans les blocs sont complètement balayées et que les signaux sont soumis avant la transformation à une compression et après la transformation inverse à une expansion.

**2.** Procédé selon la revendication 1, **caractérisé en ce** que pour détecter des variations de niveau les énergies d'un intervalle de temps, qui s'étend sur au moins deux blocs, qui sont contenues dans le signal sont déterminées et les valeurs d'énergie d'une zone plus récente de l'intervalle de temps sont comparées à celles d'une zone plus ancienne.

**3.** Procédé selon la revendication 1 ou 2, **caractérisé en ce** que les fonctions de fenêtre des fenêtres de synthèse sont déterminées en fonction des fonctions de fenêtre des fenêtres d'analyse correspondantes dans la zone de chevauchement conformément aux équations :

$$s_n(t) = \frac{a_{n+1}(T_B/2 - t)}{a_n(T_B/2 - t) * a_{n+1}(t) + a_n(t) * a_{n+1}(T_B/2 - t)} \; ; 0 \leqq t \leqq T_B/2$$

$$s_{n+1}(t) = \frac{a_n(T_B/2 - t)}{a_n(T_B/2 - t) * a_{n+1}(t) + a_n(t) * a_{n+1}(T_B/2 - t)} \; ; 0 \leqq t \leqq T_B/2$$

$a_n(t)$ représentant la fonction de fenêtre d'analyse pour le bloc n,
$s_n(t)$ représentant la fonction de fenêtre de synthèse pour le bloc n,
$a_{n+1}(t)$ représentant la fonction de fenêtre d'analyse pour le bloc n+1,
$s_{n+1}(t)$ représentant la fonction de fenêtre de synthèse pour le bloc n+1 et
TB le temps du bloc
et que les blocs qui ne se chevauchent pas de 50% sont répartis en sous-blocs et le signal est amplifié et/ou atténué en fonction des puissances moyennes de signal dans les sous-blocs dans ceux-ci lors de la compression et est traité de manière complémentaire lors de l'expansion.

**4.** Procédé selon la revendication 3, **caractérisé en ce** que la variation maximale de l'amplification et/ou de l'atténuation qui est fonction du temps est limitée.

**5.** Procédé selon la revendication 3 ou 4, **caractérisé en ce** que la répartition des blocs en sous-blocs se fait par pondération avec des fonctions de fenêtre qui présentent une valeur constante pendant l'intervalle de temps.

**6.** Procédé selon la revendication 5, **caractérisé en ce** que les fonctions de fenêtre se chevauchent et les blocs sont pondérés sur leurs deux bords avec des fonctions de fenêtre de la moitié de la largeur dans le temps.

7. Procédé selon la revendication 6, **caractérisé en ce** que les blocs sont pondérés avec des fonctions de fenêtre supplémentaires "douces" qui présentent une courbe continue, deviennent zéro aux limites des sous-blocs et se complètent dans l'ensemble du bloc à une valeur de pondération constante, de préférence en 1.

8. Procédé selon l'une des revendications 5 à 7, **caractérisé en ce** que les fonctions de fenêtre, à part sur les bords des blocs, sont des fenêtres de Hanning correspondant à des fenêtres à $\cos^2$ et que ce sont des demies fenêtres à $\cos^2$ sur les bords des blocs.

9. Procédé selon l'une des revendications 5 à 8, **caractérisé en ce** que les signaux à l'intérieur des sous-blocs respectifs sont amplifiés ou atténués avec un facteur constant.

10. Procédé selon la revendication 9, **caractérisé en ce** que les facteurs d'amplification (facteurs d'atténuation) sont dérivés des fractions de signal, qui correspondent aux puissances moyennes dans les sous-blocs, comme fractions de détection.

11. Procédé selon l'une des revendications 5 à 8, **caractérisé en ce** que les fractions de détection tout comme les sous-blocs sont obtenus par pondération des blocs avec des fonctions de fenêtre qui possèdent une valeur constante pendant l'intervalle de temps.

12. Procédé selon la revendication 11, **caractérisé en ce** que de préférence les fonctions de fenêtre se chevauchent.

13. Procédé selon l'une des revendications 10 à 12, **caractérisé en ce** que des chiffres d'indice (énergie divisée par durée de la fraction) sont formés pour les puissances moyennes dans les fractions de détection.

14. Procédé selon la revendication 13, **caractérisé en ce** que les chiffres d'indice pour les fractions de détection d'un bloc se rapportent au chiffre d'indice d'une fraction de détection, de préférence de celle avec le plus grand chiffre d'indice et que les rapports des chiffres d'indice produits déterminent les facteurs d'amplification, de préférence de manière proportionnelle.

15. Procédé selon la revendication 14, **caractérisé en ce** que des facteurs d'amplification quantifiés sont choisis.

16. Utilisation du procédé selon l'une des revendications précédentes pour la radiodiffusion, la transmission par câble, la transmission par satellite ou pour les appareils d'enregistrement.

A/D—Wandlung — 1

Selektion 1024 Abtastwerte — 2

Pegelsprung — 3

ja          nein

nicht, oder 6,25% überlappende Blöcke — 14

Bewertung mit Analysefenster — 15

Kompression — 16

Transformation — 17

Pseudobetrags— und Phasenbildung — 18

Codierung, Übertragung, Decodierung — 19

Inverse Transformation — 20

Expansion — 21

Bewertung mit Syntheserenster — 22

Überlappende Addition — 23

50% überlappende Blöcke — 4

Bewertung mit Analysefenster — 5

Transformation — 6

Pseudobetrags— und Phasenbildung — 7

Codierung, Übertragung, Decodierung — 8

Inverse Transformation — 9

Bewertung mit Syntheserenster — 10

Überlappende Addition — 11

kontinuierliche Abtastwerte — 12

D/A—Wandlung — 13

Fig. 1

12

s(t)

Aliasstörung

Nutzsignal

t

$t_b$

Fig. 2

t

1.)

2.)

3.)

Transformationsblock
ohne Zeitalias

4.)

5.)

$t_b$

Fig. 3

t

1.)

2.)

Transformationsblock
ohne Zeitalias

3.)

4.)

5.)

$t_b$

Fig. 4

13

2. Analyse- und Synthesefenster nach Bestimmungsgleichung :

Fig. 5

EP 0 494 918 B1

Fig. 6

15

Fig. 7

Fig. 8

Fig. 9

Fig. 10

Fig. 11